# FASCICULE DE BREVET EUROPEEN

(11) **EP 0 852 612 B1**
(45) Date de publication et mention de la délivrance du brevet: **10.01.2001**
(21) Numéro de dépôt: 96931842.7
(22) Date de dépôt: 13.09.1996
(51) Int. Cl.: C09J 123/08

(54) **COLLE THERMOFUSIBLE AUTO-ADHESIVE POUR L'HYGIENE**
SELBSTKLEBENDER HEIZSCHMOLZKLEBER FÜR HYGIENEPRODUKTE
HOT-MELT PRESSURE SENSITIVE ADHESIVE FOR HYGIENE APPLICATIONS

(30) Priorité: 26.09.1995 FR 9511252
(43) Date de publication de la demande: 15.07.1998
(73) Titulaire: Ato Findley S.A., 92800 Puteaux (FR)
(72) Inventeur: BAUDUIN, François, F-60280 Margny-Les-Compiegne (FR); DREYFUS, Thierry, F-95490 Vaureal (FR); GODEC, Catherine, F-60150 Chevincourt (FR)
(74) Mandataire: Haicour, Philippe
(86) Numéro de dépôt international: FR9601424
(87) Numéro de publication internationale: WO9712007

(56) Documents cités:
- EP-A- 0 547 798
- US-A- 4 874 804
- US-A- 5 331 033

## Description

La présente invention a pour objet une composition thermofusible auto-adhésive, son utilisation dans le domaine de l'hygiène, et les articles collés ainsi obtenus, notamment des changes jetables et des garnitures périodiques.

Les changes jetables sont généralement constitués d'une charge absorbante protégée sur sa face extérieure par un film de polyéthylène étanche aux liquides et recouverte intérieurement par un film de non-tissé généralement en polyéthylène qui vient au contact de la peau et permet le passage des liquides corporels vers ladite charge. Des changes plus élaborés peuvent, en outre, contenir une barrière anti-fuite de nature polyoléfinique et/ou une ceinture élastique.

Les changes sont préparés conventionnellement par collage des différents constituants à l'aide de colles thermofusibles (hot-melts) dont la composition est variable selon la nature chimique des éléments à assembler. De telles colles sont par exemple décrites dans les documents qui suivent.

Dans US 4 526 577, on propose une colle comprenant un copolymère bloc A-B-A, (dans lequel A représente une séquence non-élastomérique, par exemple le styrène, et B représente le butadiène ou le butadiène hydrogéné), une résine tackifiante compatible, une huile plastifiante et un stabilisant, et éventuellement une cire d'origine pétrolière.

Dans US 4 460 728, on décrit une colle à base d'un copolymère éthylène-acétate de vinyle ou acrylate d'alkyle, de polypropylène atactique et d'une résine tackifiante compatible, éventuellement en présence d'une huile plastifiante et/ou d'une cire d'origine pétrolière et/ou d'un stabilisant.

Dans US 4 939 202, on propose un adhésif résistant à l'humidité contenant un polymère amorphe à base de propylène, un polymère cristallin à base de propylène et une résine pétrolière contenant des hydrocarbures ayant de 4 à 10 atomes de carbone.

Dans US 5149 741, on utilise une colle thermofusible comprenant un copolymère bloc styrène-isoprène-styrène, une résine tackifiante compatible, une huile plastifiante et un stabilisant, et éventuellement une cire dérivée du pétrole.

Les garnitures périodiques quant à elles, comportent généralement une charge absorbante du type fluff de cellulose ou super-absorbant et une enveloppe à base de non-tissé en polypropylène ou en viscose sur la face externe de laquelle enveloppe est appliquée une composition adhésive permettant le positionnement sur le sous-vêtement. Pour confectionner de telles garnitures, on a proposé les compositions décrites dans les documents suivants.

Dans EP 0104005-A, on propose une colle à base d'un élastomère viscoélastique de type A-B-A, (dans lequel B représente une polyoléfine, par exemple un copolymère éthylène-butylène et A comprend un polystyrène), et d'une résine tackifiante.

Enfin, dans WO 93/10734, on décrit une composition comprenant un copolymère de formule (A-B)n -Y (dans laquelle Y est un agent de couplage multivalent, A est un monomère vinylique substitué par un radical aromatique et B est le polybutadiène), une résine tackifiante compatible et une huile plastifiante.

Les colles de l'art antérieur qui viennent d'être citées ne donnent pas toute satisfaction dans le domaine de l'hygiène.

Ainsi, dans le cas des changes jetables, les colles thermofusibles à base de polypropylène (US 4 460 728 et US 4 939 202) peuvent difficilement être mises en oeuvre dans les dispositifs conventionnels opérant par fibérisation ou pulvérisation et les compositions décrites dans US 4 526 577 et US 5 149 741 présentent une mauvaise tenue à l'eau pouvant entraîner notamment le décollement de la charge absorbante contiguë au film étanche.

Dans le cas des garnitures périodiques, les compositions adhésives précitées s'avèrent satisfaisantes en application sur une enveloppe en non-tissé. Toutefois, on constate que lesdites compositions ne sont pas adaptées à la préparation de garnitures ultra-fines de dernière génération, lesquelles comportent une enveloppe constituée d'un film ajouré ou perforé à base de polyéthylène. En effet, on constate que l'emploi de compositions à base de copolymère d'éthylène-acétate de vinyle entraîne un maculage de l'enveloppe et que les adhésifs selon EP 0 104 005-A et WO 93/10734 doivent être appliqués à une température élevée, de l'ordre de 150 à 180°C, pour adhérer de manière satisfaisante au support.

Il a maintenant été trouvé de nouvelles compositions thermoplastiques auto-adhésives ne présentant pas les inconvénients précités, ces compositions étant caractérisées en ce qu'elles comprennent
a) au moins un copolymère éthylène-acrylate d'alkyle
b) une résine tackifiante
c) éventuellement un fluidifiant et/ou un stabilisant et/ou une cire.

Le copolymère éthylène-acrylate d'alkyle selon l'invention est généralement choisi parmi les copolymères contenant de 15 à 45 % et de préférence 25 à 35 % en poids d'acrylate d'alkyle.

De manière avantageuse, l'acrylate d'alkyle est choisi parmi l'acrylate de méthyle, l'acrylate de butyle et le 2-éthylhexyl acrylate. De préférence, on utilise l'acrylate de butyle.

En général, on utilise de tels copolymères présentant un indice de fluidité (Melt-Index) compris entre 0,5 et 1000 et de préférence 2 et 500.

Parmi les mélanges des copolymères précités pouvant être employés, on peut citer tout particulièrement les mélanges à base de copolymère présentant une teneur en acrylate comprise entre 15 et 40 %, de préférence 30 et 35, et un indice de fluidité compris entre 500 et 2, de préférence 320 et 2.

La résine tackifiante selon l'invention est choisie parmi le groupe constitué par les résines hydrocarbures solides ou liquides telles que les résines aliphatiques ou aromatiques, non hydrogénées ou hydrogénées totalement ou partiellement, par exemple ESCOREZ® 5300 d'EXXON et IMARV® S 100 S d'IDEMITZU, les résines à base d'esters de colophane naturelle ou modifiée, par exemple polymérisée, notamment les esters de pentaérythritol ou de glycérol, par exemple UNITAC® R 100 L d'UNION-CAMP, les résines polyterpéniques ou polyterpéniques modifiées, par exemple WINGTACK® de GOODYEAR et les résines α-méthyl-styrène, par exemple URATACK® 68520 de DSM.

Le fluidifiant selon l'invention est choisi parmi les huiles aliphatiques ou naphténiques, les plastifiants tels que les phtalates, les adipates et les benzoates, les oléfines oligomériques ou polymériques de bas poids moléculaire, le polypropylène, le polybutène et le polyisoprène hydrogéné.

La cire selon l'invention est généralement choisie parmi les cires d'origine pétrolière ou de synthèse "Fischer Tropsch".

Le stabilisant selon l'invention est généralement choisi parmi les anti-oxydants tels que les phénols substitués, par exemple IRGANOX® 1076 de CIBA-GEIGY, et les phosphites.

La composition thermofusible auto-adhésive conforme à l'invention comprend généralement de 20 à 50 % en poids, et de préférence 30 à 40 %, de copolymère éthylène-acrylate d'alkyle, de 30 à 80 % en poids, et de préférence 40 à 60 %, de résine tackifiante, de 0 à 35 % en poids, et de préférence 10 à 25 %, de fluidifiant, de 0 à 1,5 % en poids de stabilisant et de 0 à 15 % en poids de cire.

De manière avantageuse, les compositions selon l'invention présentent une viscosité comprise entre 1000 et 10000 mPa.s (viscosimètre Brookfield - température 150-170°C).

Les compositions conformes à l'invention sont généralement obtenues par mélange à une température variant de 120 à 170°C.

Les compositions ainsi obtenues présentent une bonne adhésion sur les supports polyoléfiniques tels que les films et les non-tissés en polyéthylène ou polypropylène, une bonne cohésion et une bonne résistance à l'eau. En outre, ces compositions peuvent être mises en oeuvre très facilement selon les techniques du domaine de l'hygiène, en particulier par enduction, fibérisation, pulvérisation ou control-coating.

Les compositions thermofusibles auto-adhésives selon l'invention sont particulièrement recommandées pour la fabrication d'articles se rapportant au domaine de l'hygiène, notamment des changes jetables et des garnitures périodiques, lesquels articles constituent également un objet de l'invention. Ces compositions sont avantageusement utilisées pour fabriquer des changes comprenant un ou plusieurs films synthétiques de nature variée, élastiques ou non élastiques, par exemple tels que mis en oeuvre pour l'obtention d'une ceinture élastique. On peut, en outre, les utiliser pour stabiliser et fixer la charge absorbante, en général à base de ouate de cellulose ("fluff").

Les exemples qui suivent permettent d'illustrer l'invention. Les exemples 1 à 8 et 12 ont trait aux changes jetables et les exemples 9 à 11 concernent les garnitures périodiques.

### EXEMPLE 1

Dans un mélangeur maintenu à 130°C, on ajoute 103 g de di-octylphtalate, 400 g de copolymère éthylène-acrylate de butyle (LOTRYL® 35 BA 320; acrylate de butyle : 35 %; Melt Index : 320; ELF ATOCHEM S.A.), 490 g de résine tackifiante (ESCOREZ® 6372; EXXON) et 0,7g d'anti-oxydant (IRGANOX® 1010; CIBA-GEIGY). Après homogénéisation complète, on obtient une composition thermofusible présentant une viscosité Brookfield égale à 4500 mPa.s à 150°C.

La composition ainsi obtenue est déposée par fibérisation sur un film de polyéthylène à raison de 10 g/m². Le contrecollage est effectué d'une part sur un non-tissé en polypropylène et d'autre part sur un film de polyéthylène.

Les mesures obtenues après application du test par pelage à 180° et 200 mm/min. sont égales à 4N/25 mm et 4,4N/25 mm pour les matériaux polyéthylène/non-tissé et polyéthylène/polyéthylène respectivement.

### EXEMPLE 2

On opère dans les conditions de l'exemple 1 en présence de 65 g de polybutène (NAPVIS 10; BP), 300 g de copolymère éthylène-acrylate de butyle (LOTRYL® 35 BA 320; acrylate de butyle : 35 %; Melt Index : 320; ELF ATOCHEM S.A.), 40 g de copolymère éthylène-acrylate de butyle (LOTRYL® 30 BA 02; acrylate de butyle : 30 %; Melt Index : 2; ELF ATOCHEM S.A.), 455 g de résine tackifiante (ESCOREZ® 5320; EXXON), 45 g de cire (25 B; Total) et 5 g de stabilisant (IRGANOX® 1010; CIBA-GEIGY).

La colle ainsi obtenue est déposée par enduction sur un film de polyéthylène sur une largeur de 25 mm à raison de 5 g/m². Le contrecollage est effectué dans les conditions de l'exemple 1.

Les mesures obtenues après application du test par pelage à 180° et 200 mm/min. sont égales à 2,7N/25 mm et 2,3N/25 mm pour les matériaux polyéthylène/non-tissé et polyéthylène/polyéthylène respectivement.

### EXEMPLE 3 (comparatif)

On opère dans les conditions de fibérisation selon l'exemple 1 en présence d'une colle thermofusible à base de APAO (TH 706; CECA S.A.).

La composition ainsi obtenue n'est fibérisable que dans des conditions où la température est supérieure à 170°C et la pression en air est supérieure à 5 bar (5 x 10⁵ Pa).

### EXEMPLE 4

On opère dans les conditions de fibérisation selon l'exemple 1 en présence de la colle thermofusible de l'exemple 2.

On observe que la composition est parfaitement fibérisable dans les conditions d'application (température : 140°C; pression d'air : 1,5 bar (1,5 x 10⁵ Pa)).

### EXEMPLE 5 (comparatif)

On procède dans les conditions d'enduction de l'exemple 2 modifié en ce que l'on utilise une colle thermofusible à base de APAO (TH 706; CECA S.A.).

Les mesures obtenues après application du test par pelage à 180° et 200 mm/min. sont égales à 2,5N/25 mm et 2,1N/25 mm pour les matériaux polyéthylène/non-tissé et polyéthylène/polyéthylène respectivement.

### EXEMPLE 6

On applique la colle thermofusible selon l'exemple 1 sur un film de polyéthylène à raison de 5 g/m² et on effectue un contrecollage sur un coussin de fluff (ouate de cellulose).

On imbibe le matériau ainsi obtenu sur une surface de 20 cm x 20 cm à l'aide de 100 ml d'eau. Après 10 minutes, on gratte manuellement le fluff. On observe que la surface du polyéthylène enduite de colle reste couverte d'une pellicule de fluff.

### EXEMPLES 7 ET 8 (comparatifs)

On procède dans les conditions de l'exemple 6 en présence d'une colle caoutchouc contenant 25 % en poids de polymère styrène-butadiène-styrène (exemple 7) ou styrène-isoprène-styrène (exemple 8), 55 % en poids de résine de pétrole et 20 % en poids d'huile naphténique. On observe que la surface du polyéthylène enduite de colle ne reste pas recouverte d'une pellicule de fluff après grattage.

### EXEMPLE 9

On introduit 150g d'huile naphténique (NYTEX® 820; NYNAS) dans un mélangeur que l'on porte à 130°C. On ajoute 220 g de copolymère éthylène-acrylate de butyle (LOTRYL® 35 BA 320; acrylate de butyle : 35 %; Melt Index : 320; ELF ATOCHEM S.A.), 60 g de copolymère éthylène-acrylate de butyle (LOTRYL® 30 BA 02; acrylate de butyle : 30 %; Melt Index : 2; ELF ATOCHEM S.A.), 348 g de résine (ECR® 395; EXXON), 100g de résine tackifiante (OULUPALE® B 100; FORCHEM), 120g de résine tackifiante (URATACK® 69540; DSM) et 0,2g de stabilisant (IRGANOX® 1010; CIBA-GEIGY).

La composition ainsi obtenue, qui présente une viscosité de 3470 mPa.s à 150°C, est appliquée par enduction à 130°C sur du papier siliconé (largeur 25 mm) et transférée sur un film de polyéthylène.

L'adhésivité, mesurée selon la norme NF Q 34013, est égale à 2,0 N/25 mm.

On n'observe pas de maculage sur le support.

### EXEMPLES 10 et 11 (comparatifs)

On procède dans les conditions de l'exemple 9 en présence d'une colle d'une part à base de copolymère éthylène-acétate de vinyle (XT 7117; CECA S.A.) et d'autre part à base de copolymère styrène-butadiène-styrène (TH 712; CECA S.A.), cette dernière étant appliquée à 160°C (température limite pour l'enduction).

L'adhésivité est égale à 1,7 N/25 mm et 2,0 N/25 mm respectivement.

On observe des traces de maculage sur le support avec la colle XT 7117 (exemple 10).

On observe une détérioration du support en présence de la colle TH 712 (exemple 11) due à la température d'application élevée.

### EXEMPLE 12

On opère dans les conditions de l'exemple 1 modifié en ce que l'on utilise un copolymère éthylène-acrylate de méthyle (LOTRYL® 28 MA 175; acrylate de méthyle : 28 % ; Melt Index : 175 ; ELF ATOCHEM S.A.).

Après homogénéisation, on obtient une composition thermofusible auto-adhésive. Cette composition est déposée par fibérisation selon les modalités de l'exemple 1, le contrecollage étant effectué sur un non-tissé en polypropylène.

La mesure obtenue après application du test par pelage à 180° et 200 mm/min est égale à 3,5 N/25 mm.

## Revendications

1. Utilisation d'une composition thermofusible auto-adhésive pour coller des supports entrant dans la constitution d'articles destinés à l'hygiène, l'un au moins des supports étant polyoléfinique, caractérisé en ce que la composition comprend :
a) au moins un copolymère éthylène-acrylate d'alkyle
b) une résine tackifiante
c) éventuellement un fluidifiant et/ou un stabilisant et/ou une cire.

2. Utilisation selon la revendication 1, caractérisée en ce que le copolymère éthylène-acrylate d'alkyle contient de 15 à 45 % en poids d'acrylate d'alkyle.

3. Utilisation selon l'une des revendications 1 ou 2, caractérisée en ce que l'acrylate d'alkyle est choisi parmi l'acrylate de méthyle, l'acrylate de butyle et le 2-éthylhexyl acrylate.

4. Utilisation selon l'une des revendications 1 à 3, caractérisée en ce que le copolymère présente un indice de fluidité compris entre 0,5 et 1000.

5. Utilisation selon l'une des revendications 1 à 4, caractérisée en ce qu'elle présente une viscosité comprise entre 1000 et 10000 mPa.s.

6. Utilisation selon l'une des revendications 1 à 5, caractérisée en ce qu'elle comprend :
- de 20 à 50 % en poids de copolymère éthylène-acrylate d'alkyle
- de 30 à 80 % en poids de résine tackifiante
- de 0 à 35 % en poids de fluidifiant
- de 0 à 1,5 % en poids de stabilisant
- et de 0 à 15 % en poids de cire.

7. Utilisation selon la revendication 1, caractérisée en ce que le support polyoléfinique est un film ou un non-tissé en polyéthylène ou polypropylène.

8. Change jetable renfermant la composition selon l'une quelconque des revendications 1 à 7.

9. Garniture périodique renfermant la composition selon l'une quelconque des revendications 1 à 7.

## Claims

1. Use of pressure-sensitive hot-melt adhesive composition for sticking supports making up articles intended for hygiene, at least one of the supports being polyolefinic, characterized in that the composition includes:
a) at least one ethylene-alkyl acrylate copolymer
b) a tackifying resin
c) optionally a diluent and/or a stabilizer and/or a wax.

2. Use according to Claim 1, characterized in that the ethylene-alkyl acrylate copolymer contains from 15 to 45 % by weight of alkyl acrylate.

3. Use according to either of Claims 1 and 2, characterized in that the alkyl acrylate is chosen from methyl acrylate, butyl acrylate and 2-ethylhexyl acrylate.

4. Use according to one of Claims 1 to 3, characterized in that the copolymer exhibits a melt index of between 0.5 and 1000.

5. Use according to one of Claims 1 to 4, characterized in that it exhibits a viscosity of between 1000 and 10 000 mPa s.

6. Use according to one of Claims 1 to 5, characterized in that it includes:
- from 20 to 50 % by weight of ethylene-alkyl acrylate copolymer
- from 30 to 80 % by weight of tackifying resin
- from 0 to 35 % by weight of diluent
- from 0 to 1.5 % by weight of stabilizer
- and from 0 to 15 % by weight of wax.

7. Use according to Claim 1, characterized in that the polyolefinic support is a film or a nonwoven made of polyethylene or polypropylene.

8. Disposable nappy enclosing the composition according to any one of Claims 1 to 7.

9. Catamenial liner enclosing the composition according to any one of Claims 1 to 7.

## Patentansprüche

1. Verwendung einer selbstklebenden Schmelzklebstoffzusammensetzung zum Verkleben von Trägern, die im Aufbau von Hygieneartikeln verwendet werden, wobei mindestens ein Träger aus polyolefinischem Material besteht, dadurch gekennzeichnet, daß die Zusammensetzung enthält:
a) mindestens ein Ethylen/Alkylacrylat-Copolymer,
b) ein Klebrigmacherharz, und
c) gegebenenfalls ein Fließmittel und/oder einen Stabilisator und/oder ein Wachs.

2. Verwendung nach Anspruch 1, dadurch gekennzeichnet, daß das Ethylen/Alkylacrylat-Copolymer 15 bis 45 Gew.-% Alkylacrylat enthält.

3. Verwendung nach einem der Ansprüche 1 oder 2, dadurch gekennzeichnet, daß das Alkylacrylat unter Methylacrylat, Butylacrylat und 2-Ethylhexylacrylat ausgewählt ist.

4. Verwendung nach einem der Ansprüche 1 bis 3, dadurch gekennzeichnet, daß das Copolymer einen Schmelzindex im Bereich von 0,5 bis 1000 aufweist.

5. Verwendung nach einem der Ansprüche 1 bis 4, dadurch gekennzeichnet, daß sie eine Viskosität im Bereich von 1000 bis 10000 mPa·s aufweist.

6. Verwendung nach einem der Ansprüche 1 bis 5, dadurch gekennzeichnet, daß sie enthält:
- 20 bis 50 Gew.-% Ethylen/Alkylacrylat-Copolymer,
- 30 bis 80 Gew.-% Klebrigmacherharz,
- 0 bis 35 Gew.-% Fließmittel,
- 0 bis 1,5 Gew.-% Stabilisator, und
- 0 bis 15 Gew.-% Wachs.

7. Verwendung nach Anspruch 1, dadurch gekennzeichnet, daß der polyolefinische Träger eine Folie oder ein Vliesstoff aus Polyethylen oder Polypropylen ist.

8. Wegwerfwindel, die die Zusammensetzung nach einem der Ansprüche 1 bis 7 enthält.

9. Monatsbinde, die die Zusammensetzung nach einem der Ansprüche 1 bis 7 enthält.
